Europäisches Patentamt

European Patent Office

Office européen des brevets

(11) Veröffentlichungsnummer: **0 304 554 B1**

## EUROPÄISCHE PATENTSCHRIFT

(45) Veröffentlichungstag der Patentschrift: **15.04.92**

(51) Int. Cl.⁵: **B60J 7/12**, B60J 7/185

(21) Anmeldenummer: **88108244.0**

(22) Anmeldetag: **24.05.88**

(54) Vorrichtung zum Festlegen eines Verdecks eines Kraftfahrzeuges.

(30) Priorität: **25.08.87 DE 3728267**

(43) Veröffentlichungstag der Anmeldung:
**01.03.89 Patentblatt 89/09**

(45) Bekanntmachung des Hinweises auf die
Patenterteilung:
**15.04.92 Patentblatt 92/16**

(84) Benannte Vertragsstaaten:
**DE ES FR GB IT**

(56) Entgegenhaltungen:
CH-A- 383 793
DE-A- 1 580 535
DE-A- 3 329 406
DE-B- 1 755 619
US-A- 2 548 105

(73) Patentinhaber: **Dr.Ing.h.c. F. Porsche Aktiengesellschaft**
**Porschestrasse 42**
**W-7000 Stuttgart 40(DE)**

(72) Erfinder: **Wurl, Willi, Dipl.-Ing. FH**
**Erbprinzenstrasse 5**
**W-7532 Niefern-Öschelbronn(DE)**
Erfinder: **Dimson, Benjamin**
**Allmendaeckerstrasse 1/1**
**W-7531 Tiefenbronn-Mühlhausen(DE)**
Erfinder: **Ürlings, Rainer, Dipl.-Ing. FH**
**Aichingerstrasse 40**
**W-7255 Rutesheim(DE)**

EP 0 304 554 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft eine Vorrichtung zum Festlegen eines Verdecks eines Kraftfahrzeuges, insbesondere Personenwagens, wobei in einer Schließstellung des Verdecks ein erstes, am Windschutzscheibenrahmen in Lage gehaltenes Glied der Vorrichtung mit einem zweiten, verdeckseitig angebrachten Glied formschlüssig zusammenwirkt und das Verdeck in Längs- und Querrichtung fixiert.

Bei einer bekannten Anordnung (DE-C-1 580 535) umfaßt die Vorrichtung zum Festlegen des Verdecks einen am seitlichen Längsholm befestigten Zapfen, der etwa vertikal ausgerichtet ist und in eine am darunterliegenden Windschutzscheibenrahmen angeordnete Hülse eingreift. Die Hülse ist in eine Öffnung einer hohlträgerartig ausgebildeten Aufnahme des Windschutzscheibenrahmens eingesetzt.

Dieser Anordnung haftet der Nachteil an, daß die Vorrichtung - in Höhenrichtung gesehen - einen relativ großen Bauraum beansprucht. Ferner sind am Windschutzscheibenrahmen aufwendige Maßnahmen zur Schaffung der hohlträgerartigen Aufnahme erforderlich.

Aufgabe der Erfindung ist es, eine Vorrichtung zum Festlegen eines Verdecks zu schaffen, die bei guter Funktion einen einfachen Aufbau aufweist und in Höhenrichtung gesehen, wenig Bauraum benötigt.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausnehmung und den daran angeschlossenen, nach oben gerichteten, querverlaufenden Schenkel des ersten Gliedes und den nach unten hin offenen Aufnahmeabschnitt des zweiten Gliedes eine im Aufbau einfache Vorrichtung zum Festlegen des Verdecks geschaffen wird, die bei guter Funktion - in Höhenrichtung gesehen - wenig Bauraum beansprucht. Durch die einstückige Ausbildung des ersten Gliedes der Vorrichtung mit einem Spiegelfuß eines Innenrückblickspiegels entfallen zusätzliche Befestigungselemente für das erste Glied. Ferner reicht eine zentrale, etwa in Fahrzeugmitte angeordnete Vorrichtung zum Festlegen des Verdecks aus.

Ein Ausführungsbeispiel der Erfindung ist in der Zeichnung dargestellt und wird im folgenden näher erläutert.
Es zeigt

Fig. 1    einen Mittellängsschnitt durch einen Windschutzscheibenrahmen mit einer Vorrichtung zum Festlegen eines Verdecks eines Kraftfahrzeuges,

Fig. 2    einen Schnitt nach der Linie II-II der Fig. 1,

Fig. 3    einen Schnitt nach der Linie III-III der Fig. 1,

Fig. 4    eine Teilansicht der Fig. 1.

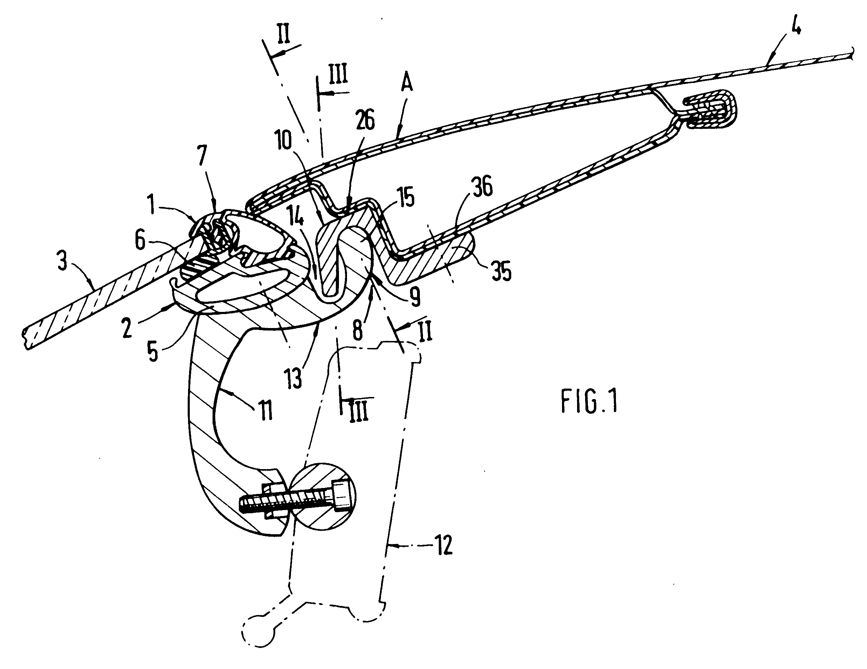

Der in Fig. 1 dargestellte Personenwagen weist einen Aufbau 1 auf, der im gezeigten Bereich durch einen Windschutzscheibenrahmen 2, einer Windschutzscheibe 3 und ein Verdeck 4 gebildet wird. Der Windschutzscheibenrahmen 3 ist durch ein hohlkörperartiges Strangpreßprofil 5 gebildet, das an der Innenseite der Windschutzscheibe 3 angeordnet und über ein Klebeelement 6 mit dieser verbunden ist.

Das Verdeck 4 liegt mit seinem vorderen Rand an einem aufbauseitigen Dichtkörper 7 auf und ist mittels nicht näher dargestellter Verschlüsse lösbar am Windschutzscheibenrahmen 2 in Lage gehalten.

Ferner ist eine Vorrichtung 8 zum Festlegen des Verdecks 4 in seiner Schließstellung A vorgesehen, durch die das Verdeck 4 in Längs- und Querrichtung fixiert wird, bevor die Verschlüsse verriegelt werden.

Die Vorrichtung 8 umfaßt ein erstes, am Windschutzscheibenrahmen 2 befestigtes Glied 9, das in Schließstellung A des Verdecks 4 formschlüssig mit einem verdeckseitig angebrachten zweiten Glied 10 zusammenwirkt. Gemäß Fig. 1 ist das erste Glied 9 einstückig mit einem etwa in einer Fahrzeuglängsmittelebene angebrachten Spiegelfuß 11 eines Innenrückblickspiegels 12 ausgebildet, wobei der Spiegelfuß 11 mittels nicht näher dargestellter Befestigungsschrauben am Windschutzscheibenrahmen 2 in Lage gehalten ist.

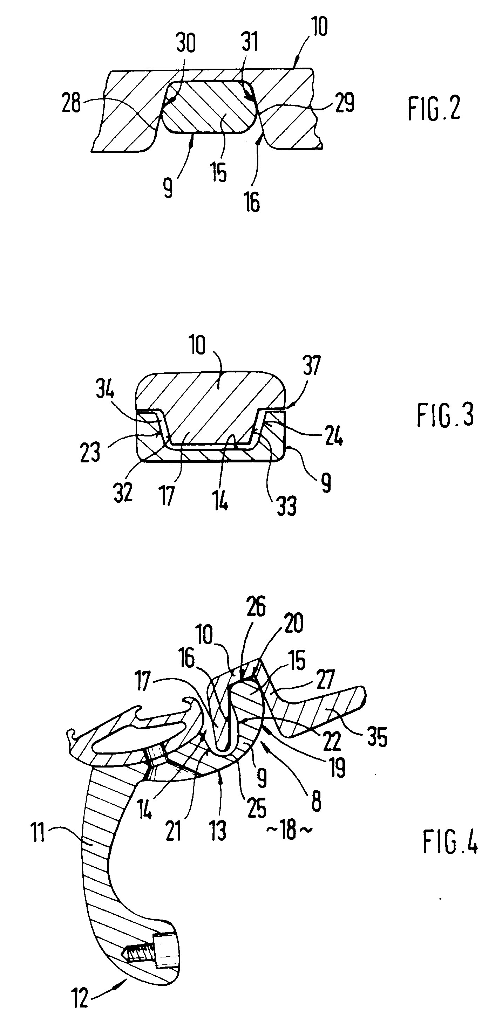

Das erste Glied 9 ist an einem obenliegenden Bereich des Spiegelfußes 11 angeschlossen und umfaßt - in Längsrichtung gesehen - eine Ausnehmung 14 und einen an diese angeformten, nach oben gerichteten, querverlaufenden Schenkel 15. Der Schenkel 15 ist in Schließstellung A von einem nach unten hin offenen Aufnahmeabschnitt 16 des zweiten Gliedes 10 umgeben, wobei ein dem Windschutzscheibenrahmen 2 zugekehrter Steg 17 des Aufnahmeabschnittes 16 in die Ausnehmung hineinragt (Fig. 4). Der Schenkel 15 des ersten Gliedes 9 ist an der einem Fahrgastraum 18 zugekehrten Seite bogenförmig nach oben gezogen und verläuft in Fortsetzung der Form des Spiegelfußes 11. Ein oberer Endbereich 20 des Schenkels 15 weist eine Querschnittserweiterung auf und ist ballig ausgebildet.

Die nach oben hin offene Ausnehmung 14 des ersten Gliedes 9 ist trogförmig ausgebildet und ist durch eine vordere Begrenzungswand 21, einen hinteren Wandabschnitt 22 und seitliche Wände 23, 24 definiert (Fig. 3 und 4). Die vordere Begrenzungswand 21 ist über einen gerundeten Übergangsbereich 25 an den Wandabschnitt 22 angeschlossen. Die seitlichen Wände 23, 24 der Ausnehmung 14 sind geneigt zu einer vertikalen Ebene angeordnet, dergestalt, daß sich die Ausnehmung 14 - in Querrichtung gesehen - nach unten hin verjüngt (Fig. 3).

Die Ausnehmung 14 ist in Fahrtrichtung gesehen, unmittelbar vor dem Windschutzscheibenrahmen 2 angeordnet. Der Übergangsbereich 25 der Ausnehmung 14 fluchtet etwa mit einem unteren Rand eines Windschutzscheibenrahmens 2.

Der ballige Endbereich 20 des Schenkels 15 wirkt formschlüssig mit einem Grund 26 des Aufnahmeabschnittes 16 des zweiten Gliedes 10 zusammen. Der Aufnahmeabschnitt 16 umfaßt zwei, etwa V-förmig zueinander angeordnete Stege 17, 27, wobei der Schenkel 15 örtlich an den Stegen 17, 27 sowie am Grund 26 anliegt (Fixierung in Längsrichtung). Zur Seite hin sind die beiden Stege 17, 27 abschnittsweise über Wandabschnitte 28, 29 miteinander verbunden, so daß der Aufnahmeabschnitt 16 bereichsweise ebenfalls eine trogförmige Konfiguration aufweist (Fig. 2). Der Aufnahmeabschnitt 16 verjüngt sich in Querrichtung gesehen nach oben hin. Der Schenkel 15 des Gliedes 9 ist der Form des Aufnahmeabschnittes 16 angepaßt, so daß die seitlichen Begrenzungsflächen 30, 31 des Schenkels 15 an den Wandabschnitten 28, 29 des Aufnahmeabschnittes 16 anliegen (Fixierung in Querrichtung).

Der Steg 17 des Aufnahmeabschnittes 16 ist - in Querrichtung gesehen - dem Formverlauf der trogartigen Ausnehmung 14 angepaßt, wobei die Seitenwände 32, 33 des Steges 17 unter Bildung eines Spaltes 34 zu den Wänden 23, 24 der Ausnehmung 14 verlaufen. Der Aufnahmeabschnitt 16 ist lediglich in einem mittleren Bereich der Quererstreckung des zweiten Gliedes 10 angeordnet. Seitlich neben dem Aufnahmeabschnitt 16 ist das zweite Glied im Querschnitt gesehen, etwa winkelförmig ausgebildet, wobei an das untere Ende des aufrechen Steges 27 ein etwa rechtwinkelig dazu abgestellter Flansch 35 verläuft. Das zweite Glied 10 ist mittels Befestigungsschrauben an einem darüberliegenden Rahmenteil 36 des Verdecks 4 befestigt. Seitlich neben dem Schenkel 15 ist - in Höhenrichtung gesehen - zwischen dem ersten Glied 9 und dem darüberliegenden zweiten Glied 10 ein Spalt 37 vorgesehen.

**Patentansprüche**

1. Vorrichtung (8) zum Festlegen eines Verdecks (4) eines Kraftfahrzeuges, insbesondere Personenwagens, wobei in einer Schließstellung (A) des Verdecks (4) ein erstes, am Windschutzscheibenrahmen (2) in Lage gehaltenes Glied (9) der Vorrichtung (8) mit einem zweiten, verdeckseitig angebrachten Glied (10) formschlüssig zusammenwirkt und das Verdeck (4) in Längs- und Querrichtung fixiert, dadurch gekennzeichnet, daß das erste Glied (9) - in Längsrichtung gesehen - einen an eine Ausnehmung (14) angeschlossenen, nach oben gerichteten, querverlaufenden Schenkel (15) umfaßt, der von einem nach unten hin offenen Aufnahmeabschnitt (16) des zweiten Gliedes (10) umgeben ist, wobei ein dem Windschutzscheibenrahmen (2) zugekehrter Steg (17) des Aufnahmeabschnittes (16) in die Ausnehmung (14) hineinragt.

2. Vorrichtung nach Anspruch 1, dadurch gekennzeichnet, daß das erste Glied (19) der Vorrichtung einstückig mit einem Spiegelfuß (11) eines Innenrückblickspiegels (12) ausgebildet ist.

3. Vorrichtung nach Anspruch 1, dadurch gekennzeichnet, daß die Ausnehmung (14) des ersten Gliedes (9) trogförmig ausgebildet ist.

4. Vorrichtung nach den Ansprüchen 1 und 3, dadurch gekennzeichnet, daß die Ausnehmung (14) benachbart einem hinteren Randbereich des Windschutzscheibenrahmens (2) angeordnet ist.

5. Vorrichtung nach Anspruch 3, dadurch gekennzeichnet, daß sich die Ausnehmung (14) - in Querrichtung gesehen - nach unten hin verjüngt.

6. Vorrichtung nach Anspruch 1, dadurch gekennzeichnet, daß der Schenkel (15) an einen hinteren Wandabschnitt (22) der Ausnehmung (14) angeschlossen ist.

7. Vorrichtung nach Anspruch 6, dadurch gekennzeichnet, daß ein oberer Endbereich (20) des Schenkels (15) ballig ausgebildet ist.

8. Vorrichtung nach Anspruch 6, dadurch gekennzeichnet, daß sich der Schenkel (15) - in Querrichtung gesehen - nach oben hin kegelstumpfförmig verjüngt.

9. Vorrichtung nach Anspruch 1, dadurch gekennzeichnet, daß der Aufnahmeabschnitt (16) des zweiten Gliedes (10) - im Querschnitt gesehen - etwa V-förmig ausgebildet ist, wobei ein Grund (26) des Aufnahmeabschnittes (16) dem Formverlauf des oberen Endbereiches (20) des Schenkels (15) angepaßt ist.

**Claims**

1. A device (8) for securing a roof (4) of motor vehicle in particular a passenger car, wherein a first member (9) of the device (8) held in position on the windscreen frame (2) cooperates in a positively locking manner with a second member (10) mounted on the roof and fixing the roof (4) in the longitudinal and transverse directions, **characterized in that** the first member (9) - as viewed in the longitudinal direction - comprises a transversely extending, upwardly orientated arm (15) adjoining a recess (14) and surrounded by a receiving portion (16) of the second member (10) open towards the bottom, a web (17) of the receiving portion (16) which faces the windscreen frame (2) projecting into the recess (14).

2. A device according to Claim 1, **characterized in that** the first member (19) of the device is constructed integrally with a foot (11) of an inner-rear view mirror (12).

3. A device according to Claim 1, **characterized in that** recess (14) of the first member (9) is constructed in the form of a trough.

4. A device according to Claims 1 and 3, **characterized in that** the recess (14) is arranged adjacent to a rear edge area of the windscreen frame (2).

5. A device according to Claim 3, **characterized in that** the recess (14) tapers inwardly downwards as viewed in the transverse direction.

6. A device according to Claim 1, **characterized in that** the arm (15) adjoins a rear wall portion (22) of the recess (14).

7. A device according to Claim 6, **characterized in that** an upper end region (20) of the arm (15) is formed in a convex manner.

8. A device according to Claim 6, **characterized in that** the arm (15) tapers inwardly upwards in a frustoconical manner as viewed in the transverse direction.

9. A device according to Claim 1, **characterized in that** the receiving portion (16) of the second member (10) is formed substantially V-shaped as viewed in the transverse direction, one base (26) of the receiving portion (16) being adapted to the shape of the upper region (20) of the arm (15).

**Revendications**

1. Dispositif (8) pour la fixation d'une capote (4) d'un véhicule automobile, notamment d'une voiture de tourisme, dans lequel, dans une première position de fermeture (A) de la capote (4), un premier organe (9) du dispositif (8), maintenu en position contre le cadre de pare-brise (2), coopère par concordance de forme avec un second organe (2) placé côté capote, et fixe la capote (4) dans la direction longitudinale et la direction transversale, caractérisé en ce que le premier organe (9) - vu dans la direction longitudinale - comporte une branche (15) raccordée à un évidement (14), dirigée vers le haut, s'étendant transversalement, qui est entourée par une partie de logement (16) ouverte vers le bas du second organe (10), une cloison (17), tournée vers le cadre de pare-brise (2), de la partie de logement (16) s'engageant dans l'évidement (14).

2. Dispositif selon la revendication 1, caractérisé en ce que le premier organe (19) du dispositif est réalisé d'une seule pièce avec un pied de rétroviseur (11) d'un rétroviseur intérieur (12).

3. Dispositif selon la revendication 1, caractérisé en ce que l'évidement (14) du premier organe (9) est en forme de cuvette.

4. Dispositif selon les revendications 1 et 3, caractérisé en ce que l'évidement (14) est voisin d'une zone de bordure arrière du cadre de pare-brise (2).

5. Dispositif selon la revendication 3, caractérisé en ce que l'évidement (14) - vu dans la direction transversale - se rétrécit vers le bas.

6. Dispositif selon la revendication 1, caractérisé en ce que la branche (15) fait suite à une partie de paroi arrière (22) de l'évidement (14).

7. Dispositif selon la revendication 6, caractérisé en ce qu'une zone terminale supérieure (20) de la branche (15) est bombée.

8. Dispositif selon la revendication 6, caractérisé en ce que la branche (15) - vue dans la direction transversale - se rétrécit vers le haut en tronc de cône.

9. Dispositif selon la revendication 1, caractérisé en ce que la partie de logement (16) du second organe (10) - vue en coupe transversale - est à peu près en V, un fond (26) de la partie de logement (16) étant adapté à la forme de la zone terminale supérieure (20) de la branche

(15).

FIG.1

FIG.2

FIG.3

FIG.4